(19) Europäisches Patentamt
European Patent Office
Office européen des brevets

(11) **EP 2 169 006 A1**

(12) **EUROPEAN PATENT APPLICATION**
published in accordance with Art. 153(4) EPC

(43) Date of publication:
**31.03.2010 Bulletin 2010/13**

(21) Application number: **08790613.7**

(22) Date of filing: **25.06.2008**

(51) Int Cl.:
*C08L 67/04* (2006.01)    *B29C 45/00* (2006.01)
*C08J 5/04* (2006.01)    *C08K 5/521* (2006.01)
*C08K 7/02* (2006.01)    *C08L 101/16* (2006.01)
*B29K 67/00* (2006.01)

(86) International application number:
**PCT/JP2008/061546**

(87) International publication number:
**WO 2009/008262 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.07.2007 JP 2007183129**

(71) Applicant: **Fujifilm Corporation Tokyo 106-0031 (JP)**

(72) Inventor: **KAWASAKI, Hidetoshi Odawara-shi Kanagawa (JP)**

(74) Representative: **HOFFMANN EITLE Patent- und Rechtsanwälte Arabellastrasse 4 81925 München (DE)**

(54) **INJECTION MOLDED ARTICLE OF FIBER-REINFORCED POLYLACTIC ACID RESIN**

(57)    Provided is an injection-molded article of a fiber-reinforced polylactic acid resin, which is excellent in mechanical strength and flame retardancy, and still has a high recyclability. The injection-molded article of a fiber-reinforced polylactic acid resin has a mean thickness of 2.0 mm or more, and is obtainable by injection molding of a resin composition containing components (1) to (3) below:
(1) at least 50 parts by weight of a polylactic acid resin;
(2) 10 to 25 parts by weight of petroleum-based fibers with a melting point of 200 to 300˚C; and
(3) 2 to 10 parts by weight of a monomeric phosphate ester.

FIG. 1

000001 15KV X1.50K 20.0um

**Description**

TECHNICAL FIELD

The present invention relates to injection-molded articles of a fiber-reinforced polylactic acid resin. The injection-molded article of the present invention that is composed of a fiber-reinforced polylactic acid resin is excellent in mechanical strength, impact strength in particular, and flame retardancy, and is suitably used for a variety of recording media, such as photosensitive materials for photographs, magnetic recording materials and optical recording materials, and for structural parts, containers, and functional parts of cameras, copying machines, printers, photoprinting apparatus, printing presses, medical instruments, instruments for life-science use, information appliances, and so forth.

BACKGROUND ART

Attention is centering on biomass resins derived from biological sources including plants as the new resin resources which are likely to contribute to the prevention of global warming and the establishment of a sound material-cycle society. Among others, polylactic acid resins are going to be produced on a larger scale, and researches on their practical use are furthest along, so that it is expected that injection-molded articles of a polylactic acid resin have various applications.

In fact, injection-molded articles of a polylactic acid resin have carried a problem of low resistance to heat, The problem can be solved indeed by promoting crystallization of the polylactic acid resin, as described in Patent Document 1. However, if crystallization of the polylactic acid resin is promoted, there arises another problem, such as increased costs due to a prolonged cycle time of injection molding.

In addition, injection-molded articles of a polylactic acid resin have carried a problem of poor mechanical strength, low impact resistance for instance. The problem in turn can be solved by alloying the poylactic acid resin with a petroleum resin having a good mechanical strength, as described in Patent Document 2. Alloying a poylactic acid resin with a petroleum resin so as to give an adequate mechanical strength to injection-molded articles, however, will reduce the proportion of the polylactic acid resin in the injection-molded articles, that is to say, reduce the plant-based resin ratio (ratio of plant-derived resin ingredient or ingredients to the whole of the resin ingredients of an injection-molded article) to about 30%, a ratio inadequate to contribute to the prevention of global warming and the establishment of a sound material-cycle society.

As described on page 34 of Non-Patent Document 1, it is generally known to reinforce a plastic such as polylactic acid resin with such a filler as fiberglass, talc, and calcium carbonate.

A known method of improving-the heat resistance and mechanical strength of an injection-molded article of a polylactic acid resin comprises reinforcing with fibers. An injection-molded article of a fiber-reinforced polylactic acid resin can have an increased plant-based resin ratio of 50% or more, which favorably contributes to the prevention of global warming and the establishment of a sound material-cycle society.

Patent Document 3 discloses an injection-moldable, fiber-reinforced polylactic acid resin composition which contains a polylactic acid resin, glass fibers, and talc with a mean particle size of 0.1 to 3 $\mu$m. Patent Document 4 discloses an injection-moldable, kenaf fiber-reinforced resin composition in which polylactic acid is used as a biodegradable resin.

Nevertheless, the mechanical strength of an injection-molded article reinforced with glass fibers or vegetable fibers such as kenaf fibers may not be adequate for certain applications. For instance, the cabinet of a large instrument weighing 10 kg or more needs a higher mechanical strength in order to support the self weight, and the resistance to the impact during transport as well. The injection-molded article to be used for the cabinet has a mean thickness of 2.0 mm or more. The injection-molded article as such is required to have a specified mechanical strength, particularly an Izod impact strength of 5 kJ/cm$^2$ or more (JIS K-7110). If an injection-molded article of a polylactic acid resin reinforced with glass fibers or vegetable fibers such as kenaf fibers is employed as the above injection-molded article, the mechanical strength will be poor, with the Izod impact strength as required being unable to be attained.

Further, glass fibers as reinforcements may be exposed at the surface of an injection-molded article to prick the human body which has come into contact with the article. On the other hand, vegetable fibers such as kenaf fibers should vary in quality, so that use of vegetable fibers as reinforcements is not favorable in view of the quality stability of injection-molded articles.

The mechanical strength of an injection-molded article of a fiber-reinforced polylactic acid resin can be improved by using petroleum-based fibers having a higher strength, tensile strength for instance, than glass fibers or vegetable fibers such as kenaf fibers because the strength of the injection-molded article of a fiber-reinforced polylactic acid resin depends on the strength of the fibers used.

There, however, remains a problem in that the mechanical strength of an injection-molded article of a polylactic acid resin may be lower than expected, with the Izod impact strength as required being unable to be attained, even if the resin is reinforced with petroleum-based fibers.

Moreover, assuming that an injection-molded article of a polylactic acid resin has the Izod impact strength as required, an injection-molded article newly obtained by melting the former one to prepare a raw material for injection molding and repeating injection molding with such material will have a mechanical strength lower than expected, with the Izod impact strength as required being unable to be attained. In other words, injection-molded articles of a polylactic acid resin have a lower recyclability.

If injection-molded articles of a fiber-reinforced polylactic acid resin are required to be flame-retardant, it is preferable to blend a polymeric phosphate ester-based flame retarder having more flame-retardant effect, such as a condensed phosphate ester or an ammonium polyphosphate salt, with the polylactic acid resin. A larger amount of the polymeric phosphate ester-based flame retarder blended makes indeed the flame retardancy of injection-molded articles higher, but at the same time raises problems with the injection-molded articles, such as a reduced mechanical strength, a reduced plant-based resin ratio, and a reduced recyclability. It is hitherto impossible to obtain the injection-molded article of a fiber-reinforced polylactic acid resin that is excellent in both mechanical strength and flame retardancy.

Non-Patent Document 1: Isao SOMA, Kazuya NAGATA, and Manabu NOMURA, "Shoho kara Manabu Fira Katsuyo Gijutsu (Introductory Handbook to Utilization of Fillers)," published by Kogyo Chosakai Publishing, Inc. on October 20, 2003.

Patent Document 1: JP 2003-301097 A
Patent Document 2: JP 2006-131828 A
Patent Document 3: JP 2005-200517 A
Patent Document 4: WO2004/063282 A1

DISCLOSURE OF THE INVENTION

PROBLEMS TO BE SOLVED BY THE INVENTION

For the purpose of solving the abovementioned problems with the prior art, the present invention has an object of providing the injection-molded article of a fiber-reinforced polylactic acid resin which is excellent in mechanical strength, impact resistance in particular, and flame retardancy, and still has a high recyclability.

MEANS TO SOLVE THE PROBLEMS

In order to achieve the object as above, the present invention provides an injection-molded article of a fiber-reinforced polylactic acid resin having a mean thickness of 2.0 mm or more, which is obtainable by injection molding of a resin composition containing components (1) to (3) below:

(1) at least 50 parts by weight of a polylactic acid resin;
(2) 10 to 25 parts by weight of petroleum-based fibers with a melting point of 200 to 300°C; and
(3) 2 to 10 parts by weight of a monomeric phosphate ester (hereafter referred to as "the injection-molded article of the present invention").

In the injection-molded article of the present invention, the monomeric phosphate ester is preferably at least one selected from the group consisting of trimethyl phosphate (TMP), triethyl phosphate (TEP), triphenyl phosphate (TPP), and tricresyl phosphate (TCP).

In the injection-molded article of the present invention, it is preferable that the resin composition further contains 5 to 15 parts by weight of at least one selected from the group consisting of condensed phosphate esters and ammonium polyphosphates.

In the injection-molded article of the present invention, the petroleum-based fibers are preferably of at least one selected from the group consisting of polyethylene terephthalate (PET), polyphenylene sulfite (PPS), and polyimide (PI).

In the injection-molded article of the present invention, it is preferable that the resin composition has a temperature T falling within the range:

$$T_m \text{ (melting point of the petroleum-based fibers)} - 60°C \leqq T < T_m - 30°C$$

during compounding and molding in the injection molding.

The present invention also provides a resin composition for use in fabrication of the injection-molded article of the present invention as described above, which is obtainable by compounding the components (1) to (3):

(1) at least 50 parts by weight of a polylactic acid resin;
(2) 10 to 25 parts by weight of petroleum-based fibers with a melting point of 200 to 300˚C; and
(3) 2 to 10 parts by weight of a monomeric phosphate ester under such conditions as realizing a temperature T falling within the range:

$$T_m \text{ (melting point of the petroleum-based fibers)} - 60°C \leqq T$$
$$< T_m - 30°C.$$

Preferably, the above resin composition is obtainable by compounding not only the components (1) to (3) but 5 to 15 parts by weight of at least one selected from the group consisting of condensed phosphate esters and ammonium polyphosphates under such conditions as realizing a temperature T falling within the range as above.

EFFECTS OF THE INVENTION

The injection-molded article of the present invention is excellent in mechanical strength, impact resistance in particular, and flame retardancy, and is suitably used for a variety of recording media, such as photosensitive materials for photographs, magnetic recording materials and optical recording materials, and for structural parts, containers, and functional parts of cameras, copying machines, printers, photoprinting apparatus, printing presses, medical instruments, instruments for life-science use, information appliances, and so forth, especially for the cabinet of a large instrument weighing 10 kg or more.
A good mechanical strength, a high impact resistance in particular, is attained even with an injection-molded article newly obtained by melting the injection-molded article of the present invention to prepare a raw material for injection molding and repeating injection molding with the material, so that the inventive injection-molded article is also excellent in terms of recyclability.

BRIEF DESCRIPTION OF THE DRAWINGS

[FIG. 1] FIG. 1 is an SEM photograph of the injection-molded article of Example 5.
[FIG. 2] FIG. 2 is an SEM photograph of the injection-molded article of Example 10.
[FIG. 3] FIG. 3 is an SEM photograph of the injection-molded article of Comparative Example 6.

BEST MODE FOR CARRYING OUT THE INVENTION

The injection-molded article of the present invention, as being an injection-molded article of a fiber-reinforced polylactic acid resin having a mean thickness of 2.0 mm or more, is chiefly used for such applications as the cabinet of a large instrument particularly weighing 10 kg or more. The injection-molded article to be used for such applications is required to have a good mechanical strength, a high impact resistance in particular, so that the Izod impact strength thereof should be 5 kJ/cm² or more (JIS K-7110). In addition, the injection-molded article to be used for such applications should have a tensile strength of 40 MPa or more.
The injection-molded article of the present invention is obtained by the injection molding of a resin composition containing a polylactic acid resin, petroleum-based fibers with a temperature of 200 to 300˚C (hereafter also referred to simply as "petroleum-based fibers"), and a monomeric phosphate ester.
The inventors of the present invention diligently studied the cause of the reduction in mechanical strength of injection-molded articles of a polylactic acid resin reinforced with petroleum-based fibers and found after all that the reduction in mechanical strength of the injection-molded articles is caused by the cracks which are generated at fiber surfaces by the thermal shrinkage of the petroleum-based fibers due to the heating during compounding and molding in the injection molding. The inventors also found that crack generation at fiber surfaces by the thermal shrinkage proceeds at a temperature about 30˚C lower than the melting point of the petroieum-based fibers. Based on these findings, the inventors of the present invention focused their attention on the use of a plasticizer as a means for softening the petroleum-based fibers at as low a temperature as possible during compounding, and then found that the use of a monomeric phosphate ester as a plasticizer highly effective at softening the petroleum-based fibers allows the compounding and molding temperature to be reduced from the melting point of the petroleum-based fibers to an adequate extent, more specifically, reduced from the melting point of the petroleum-based fibers by 30˚C or more - actually in Examples 1 to 3 as will be described later, the compounding and molding temperature was made 60 to 150˚C lower than the melting point of the petroleum-based fibers - so that the crack generation at fiber surfaces and the reduction in mechanical strength of the injection-molded articles due to the cracks generated are prevented. Such an effect also prevents the reduction in mechanical strength of an injection-molded article obtained by melting another injection-molded article to prepare a raw material for injection molding and repeating injection molding with the material, which improves the recyclability of injection-molded articles.

Moreover, monomeric phosphate esters serve as a flame retarder as well. Monomeric phosphate esters have such flame-retardant effects that they are converted into polyphosphoric acid during burning, with which a burning surface is coated, or that they carbonize the resins to which they are added by means of their dehydrating action. Consequently, the injection-molded article of the present invention that contains a monomeric phosphate ester is also excellent in flame retardancy.

The following description is made about individual components of the resin composition to be used for injection molding.

The resin composition contains at least 50 parts by weight of a polylactic acid resin. The resin composition as such is preferable in view of the contribution to the prevention of global warming and the establishment of a sound material-cycle society because the injection-molded article of the present invention that is obtained by the injection molding of the resin composition containing at least 50 parts by weight of a polylactic acid resin will have a plant-based resin ratio of 50% or more. More preferably, the resin composition contains not less than 70 parts by weight of a polylactic acid resin.

Specific examples of the polylactic acid resin to be used in the resin composition include lactic acid monopolymer resins, lactic acid copolymer resins, and blend resins containing such lactic acid resins. The lactic acid component as a raw material for a lactic acid resin is not particularly limited but may be L-lactic acid, D-lactic acid, DL-lactic acid, or a mixture thereof, or else, a cyclic dimer of lactic acid, namely L-lactide, D-lactide, meso-lactide, or a mixture thereof.

While the constituent molar ratio of L-form to D-form (L/D) of the lactic acid is not particularly limited, the L-form preferably comprises at least 80% by mole, more preferably at least 90% by mole of the whole lactic acid. As to the lactide also, the L-form preferably comprises at least 80% by mole, more preferably at least 90% by moles of the whole lactide. The polylactic acid resin generally has a weight-average molecular weight of 50,000 to 500,000, preferably 100,000 to 250,000. With a weight-average molecular weight of less than 50,000, no such physical properties are attained as meeting practical requirements. With a weight-average molecular weight of more than 500,000, the injection moldability is liable to decrease.

Exemplary lactic acid monopolymer resins include those resins which are obtained by the direct dehydrocondensation of L-lactic acid, D-lactic acid, DL-lactic acid, or a mixture thereof, or the ring-opening polymerization of L-lactide, D-lactide, meso-lactide, or a mixture thereof. Exemplary lactic acid copolymer resins include those resins which are obtained by the copolymerization of the lactic acid monomer or lactide with other component copolymerizable with the monomer. Other copolymerizable component is exemplified by dicarboxylic acids, polyhydric alcohols, hydroxycarboxylic acids and lactones, each having two or more ester linkage-forming functional groups in the molecule, as well as diverse polyesters, polyethers and polycarbonates comprising the aforementioned various components.

Examples of the dicarboxylic acids include succinic acid, adipic acid, phthalic acid, and terephthalic acid, and examples of the polyhydric alcohols include aliphatic polyhydric alcohols such as ethylene glycol and propylene glycol, aromatic polyhydric alcohols as an adduct resulting from the addition reaction of ethylene oxide to bisphenol, and ether glycols such as diethylene glycol and triethylene glycol.

Examples of the hydroxycarboxylic acids include glycolic acid and hydroxybutyl carboxylic acid. Examples of the lactones include glycolide, ε-caprolactone glycolide, and ε-caprolactone.

The diverse polyesters, polyethers and polycarbonates as referred to above may non-limitatively be used as long as they have previously been used for the production of lactic acid copolymer resins.

The lactic acid monopolymer or copolymer may be synthesized by a known method. To be more specific, the polymer may be synthesized by the direct dehydrocondensation of lactic acid monomers as described in JP 7-33861 A, JP 59-96123 A, and the Polymer Preprints, Japan, Vol. 44, pp. 3198-3199, or the ring-opening polymerization of cyclic dimers of lactic acid, namely lactide molecules.

In the case of direct dehydrocondensation, the lactic acid to be used may be L-lactic acid, D-lactic acid, DL-lactic acid, or a mixture thereof. Similarly, in the case of ring-opening polymerization, the lactide to be used may be L-lactide, D-lactide, DL-lactide, meso-lactide, or a mixture thereof.

Synthesis, purification and polymerization of lactide are described in such documents as USP 4057537, EP 261572 A, Polymer Bulletin, 14, 491-495 (1985), and Makromol. Chem., 187, 1611-1628 (1986).

The catalyst to be used for the polymerization reaction of lactic acid monomers or lactides is not particularly limited but may be a known catalyst for lactic acid polymerization. Examples include tin compounds such as tin lactate, tin tartrate, tin dicaprirate, tin dilaurate, tin diparmitate, tin distearate, tin dioleate, tin α-naphthoate, tin β-naphthoate and tin octoate, powdery tin, tin oxide; powdery zinc, zinc halide, zinc oxide, organic zinc compounds; titanium compounds such as tetrapropyl titanate; zirconium compounds such as zirconium isopropoxide; antimony compounds such as antimony trioxide; bismuth compounds such as bismuth(III) oxide; and aluminum compounds such as aluminum oxide and aluminum isopropoxide.

The blend resins containing lactic acid resins are obtained as a blend prepared by mixing a lactic acid monopolymer resin and/or lactic acid copolymer resin and polyester, preferably other than polylactate ester, together and melting the resultant mixture. Blending of polyester allows molded articles to be flexible and resistant to impact. A common blending ratio is such that about 10 to 100 parts by weight of polyester other than polylactate ester is contained with respect to 100 parts by weight of a lactic acid monopolymer resin and/or lactic acid copolymer resin. The polyester is an aliphatic polyester, an aromatic polyester, or a mixture thereof, whereupon an aliphatic polyester is particularly preferred because it is mixed well with lactic acid.

Examples of the aliphatic polyester to be blended include a resin composed of an aliphatic carboxylic acid component and an aliphatic alcohol component, and an aliphatic hydroxycarboxylic acid resin obtained by the ring-opening polymerization of ε-caprolactone or other cyclic anhydrate. The aliphatic polyester may be of a copolymeric form as long as it is a resin composed chiefly of such aliphatic monomer components as above, or may be a mixture with another resin.

It is preferable that the aliphatic polyester to be used for blending is composed of an aliphatic dicarboxylic acid and an aliphatic diol. Examples of the aliphatic dicarboxylic acid include compounds of succinic acid, adipic acid, suberic acid, sebacic acid, and dodecanoic acid, as well as anhydrates and derivatives thereof. Examples of the aliphatic diol commonly include glycol compounds, such as ethylene glycol, butane diol, hexane diol, octane diol and cyclohexane dimethanol, and derivatives thereof. The above aliphatic dicarboxylic acids and aliphatic diols are each a monomer compound having an alkylene group, cyclo-ring group, or cycloalkylene group with a carbon number of 2 to 10. The condensation polymerization of the monomer compounds which are selected from among such aliphatic dicarboxylic acids and aliphatic diols as above yields the aliphatic polyester. For either of the carboxylic acid component and the alcohol component, two or more compounds may be used.

For the purpose of branching the polymer chain of the aliphatic polyester to be used for blending in order to improve the melt viscosity of the polymer, a trifunctional or higher carboxylic acid, alcohol or hydroxycarboxylic acid may be used as a component of the aliphatic polyester. Use of such a substance in a large amount may bring about the polymer with a crosslinked structure that is no more thermoplastic, or the polymer in which a highly crosslinked microgel is partially generated even if the polymer is still thermoplastic. Accordingly, the trifunctional or higher component, if used, should be contained in the polymer at a very small ratio, that is to say, should not be contained to the extent of substantially affecting the chemical and physical properties of the polymer. Malic acid, tartaric acid, citric acid, trimellitic acid, pyromellitic acid, or pentaerythritol, trimethylolpropane, or the like may be used as the polyfunctional component.

The aliphatic polyester may be produced by a direct polymerization method in which compounds selected from those mentioned above are polymerized while removing water present in the compounds or generated during the polymerization, so as to obtain a product with a high molecular weight. Alternatively, the polyester may be produced by an indirect polymerization method in which compounds selected from those mentioned above are initially polymerized to oligomers, then the oligomers are further polymerized using a small amount of a chain extender for molecular weight increase, with the chain extender being exemplified by a diisocyanate compound such as hexamethylene diisocyanate, isophorone diisocyanate, xylylene diisocyanate or diphenylmethane diisocyanate, so as to obtain a polymer with a higher molecular weight. A method in which an aliphatic polyester carbonate is obtained by using a carbonate compound is also usable.

The petroleum-based fibers to be used as reinforcement fibers can be selected from a wide variety of synthetic fibers made from petroleum and having a melting point of 200 to 300˚C. If the melting point of the petroleum-based fibers is lower than 200˚C, it is not possible to carry out compounding and molding at a temperature causing no cracks at the petroleum-based fiber surfaces because the polylactic acid resin is not melted at a temperature at least 30˚C lower than the melting point of the petroleum-based fibers. If the melting point of the petroleum-based fibers is higher than 300˚C, the compounding and molding temperature must be raised in order to softening the petroleum-based fibers, leading to the thermal decomposition of the polylactic acid resin.

Among the petroleum-based fibers having a melting point of 200 to 300˚C, those which are of polyethylene terephthalate (PET), polyphenylene sulfite (PPS), and polyimide (PI) are preferable because such materials have a high tensile strength and a good heat resistance, are easy to form into fibers, and are less expensive. PET fibers are especially preferred in view of their low costs and for the sake of recyclability of PET bottles and so forth from which they can be recycled.

The petroleum-based fibers having a melting point of 200 to 300˚C are contained in the resin composition in an amount of 10 to 25 parts by weight. If the petroleum-based fiber content is lower than 10 parts by weight, the mechanical strength of injection-molded articles is so poor that the Izod impact strength as required is unable to be attained. If the petroleum-based fiber content is higher than 25 parts by weight, the plant-based resin ratio of injection-molded articles is reduced. The petroleum-based fiber content is preferably 12 to 20 parts by weight.

The cross-sectional shape of the petroleum-based fibers is not particularly limited but selected appropriately in accordance with the properties which injection-molded articles are required to have. A circular or elliptical cross section is favorable because the production costs are reduced, and the dispersibility in the resin composition is enhanced. On the other hand, with a cross section in a special shape, for instance, a triangular, rectangular, hexagonal, octagonal, or other polygonal cross section, a cross section irregular in shape, or a cross section with indentations, the area of contact with the polylactic acid resin is increased, so that a better adhesion between the polylactic acid resin and the petroleum-based fibers and an improved strength of injection-molded articles are expected.

The length of the petroleum-based fibers is preferably 5 to 10 mm on the average. If the petroleum-based fibers are shorter than 5 mm, the mechanical strength of injection-molded articles may be so poor that the Izod impact strength as required is unable to be attained. If the petroleum-based fibers are longer than 10 mm, neither compounding nor molding is readily performed during the injection molding.

It is more preferable that the petroleum-based fibers have a mean length of 1 to 20 mm, even more preferably of 3 to 10 mm.

The diameter of the petroleum-based fibers is preferably 1 to 20 $\mu$m on the average. In this regard, the diameter refers to that of the cross section which is obtained by cutting a petroleum-based fiber perpendicularly to its longitudinal axis. If the petroleum-based fibers have a cross section in a special shape, the diameter is to be that of the circle which corresponds to the cross section in area (Heywood diameter).

While the mechanical strength of injection-molded articles is likely to increase as the petroleum-based fibers have a smaller diameter, a diameter of less than 1 $\mu$m may increase the production costs of the fibers, make the injection molding difficult, or reduce the dispersibility in the resin composition as a result of the agglomeration of the fibers during compounding.

It is more preferable that the petroleum-based fibers have a mean diameter of 1 to 20 $\mu$m, even more preferably of 5 to 15 $\mu$m.

The aspect ratio (ratio of length to diameter) of the petroleum-based fibers is preferably 100 to 1,000 on the average. Since the petroleum-based fibers are formed by drawing, an aspect ratio of more than 1,000 may make the fibers suffer from cracks due to the thermal shrinkage during compounding or molding. At the same time, a larger aspect ratio of 100 or more is preferred in order to improve the mechanical strength of injection-molded articles. It is more preferable that the petroleum-based fibers have a mean aspect ratio of 200 to 500.

In the case where the petroleum-based fibers are of hydrophobic nature, the fibers may be subjected to a surface treatment for increasing the affinity with the polylactic acid resin to achieve a better adhesion between the petroleum-based fibers and the polylactic acid resin. Effective surface treatments are exemplified by a treatment with a coupling agent such as silane or titanate coupling agents, ozone treatment, plasma treatment, and a treatment with a surfactant such as alkyl phosphate surfactants.

The monomeric phosphate ester acting as a plasticizer and flame retarder is contained in the resin composition in an amount of 2 to 10 parts by weight. If the monomeric phosphate ester content is lower than 2 parts by weight, the ester is not effective enough as a plasticizer, that is to say, to soften the petroleum-based fibers during compounding and molding, which makes it impossible to reduce the compounding and molding temperature from the melting point of the petroleum-based fibers by 30°C or more, leading to the crack generation at the petroleum-based fiber surfaces by thermal shrinkage and, eventually, the reduction in mechanical strength of injection-molded articles. If the monomeric phosphate ester content is higher than 10 parts by weight, the plant-based resin ratio of injection-molded articles is reduced. In addition, too great an effect of softening the petroleum-based fibers lowers the deflection temperature under load (1.8 MPa), so that the mechanical strength of injection-molded articles is also reduced.

Preferable examples of the monomeric phosphate ester include trimethyl phosphate (TMP: molecular weight, 140), triethyl phosphate (TEP: molecular weight, 182), triphenyl phosphate (TPP: molecular weight, 326), and tricresyl phosphate (TCP: molecular weight, 368), each of which readily penetrates the petroleum-based fibers owing to its low molecular weight. While TPP was used in Examples as will be described later, similar results were obtained with TCP having nearly the same molecular weight. TMP and TEP having even lower molecular weights are even more effective for plasticization, allowing compounding and molding temperatures 5 to 10°C lower than those attained with TPP.

In the case where injection-molded articles have an application requiring such a particular flame retardancy as receiving a UL 94 V0 or higher rating, it is preferable to make the resin composition contain as a flame retarder 5 to 15 parts by weight of at least one selected from the group consisting of condensed phosphate esters and ammonium polyphosphates.

Condensed phosphate esters as a condensation product of two or more phosphoric acid molecules, and ammonium polyphosphates are conventional flame retarders. A resin composition containing a polylactic acid resin and petroleum-based fibers as reinforcements has had to contain at least 30 parts by weight of such a flame retarder for the application which requires a flame retardancy receiving a UL 94 V0 or higher rating. In the injection-molded article of the present invention, the monomeric phosphate ester that also acts as a flame retarder allows the polymeric phosphate ester-based flame retarders as above to be contained in a reduced amount of 15 parts by weight or less. By reducing the amount of a polymeric phosphate ester-based flame retarder in the composition, the mechanical strength and plant-based resin ratio of injection-molded articles are improved.

If one or more selected from the group consisting of condensed phosphate esters and ammonium polyphosphates are to be contained as a flame retarder, it is more preferable that their content is 5 to 15 parts by weight.

Apart from the substances as described above, the resin composition may contain a known substance commonly added to resin compositions for injection molding in an amount producing no adverse effects on the injection-molded article of the present invention. Typical known substances as such include stabilizers such as antioxidants, heat resistance stabilizers, ultraviolet absorbers and light stabilizers, antistatic agents, neutralizing agents, colorants such as dyes and pigments, lubricants, crystallization promoters, nucleating agents, and mold release agents. Those substances may be contained in the composition preferably in a total amount of 10 parts by weight or less, more preferably of 5 parts by weight or less, and even more preferably of 3 parts by weight or less.

The injection-molded article of the present invention is obtained by the injection molding of the resin composition as described above. The technique to be applied to the injection molding is not particularly limited, but a known technique may be employed to carry out the injection molding. The injection molding is preferably carried out in such a manner that the resin composition has a temperature T falling within the range:

$$T_m \text{ (melting point of the petroleum-based fibers)} - 60°C \leq T < T_m - 30°C$$

during compounding and molding.

The temperature T of the resin composition during compounding and molding should be understood neither as a set temperature in a compounding chamber of a compounder nor a set temperature in a cylinder or nozzle of an injection molding machine, but as an actual temperature of the resin composition in itself during compounding and molding. If the resin composition has a temperature T lower than $T_m - 60°C$, the polylactic acid resin is not melted or the petroleum-based fibers are not softened adequately, resulting in unsuitable compounding and molding. If the resin composition has a temperature T higher than $T_m - 30°C$, cracks are generated at the petroleum-based fiber surfaces by thermal shrinkage during compounding and molding, resulting in a poor mechanical strength of injection-molded articles.

A resin composition for use in the injection molding may also be prepared by a prior compounding. In the case of using a resin composition prepared by a prior compounding, temperature conditions for the compounding are critical because the cracks which have possibly been generated at the petroleum-based fiber surfaces by thermal shrinkage already at the stage of resin-composition preparation would cause the reduction in mechanical strength of injection-molded articles. The prior compounding is preferably carried out under such conditions as realizing a temperature T falling within the range as above.

In the injection molding as above, compounding is not particularly limited in method thereof. As an example, a known compounder may be used to carry out compounding. Typical known compounders include a twin screw kneader (manufactured by TOSHIBA MACHINE CO., LTD.; product number, TEM-26SS).

The resin composition after compounding is generally pelletized before it is charged into an injection molding machine. While the size and shape of pellets can be selected appropriately in accordance with the injection molding method or injection molding machine used, exemplary pellets are of a cylindrical shape with a diameter of 2 to 3 mm and a height of 5 to 10 mm.

In the injection molding as above, the method of injection molding is not particularly limited either, but a known injection molding method may be employed. In an example of the injection molding method which may be employed, a pelletized resin composition is melted by heating, then pressed by a plunger or screw so that it may be poured into a mold to the extent that the mold is filled with the composition, and a molded article is obtained by solidifying or curing the resin composition in the mold.

To be more specific, usable injection molding methods include the method in which a resin composition is subjected to injection molding on an in-line screw system to obtain a molded article. The injection molding method on an in-line screw system comprises the step of loading a hopper with a pelletized resin composition, the step of plasticization and measurement in a heating cylinder, the step of injection from the heating cylinder into a mold, the step of dwell and cooling in the mold, and the step of removal after mold opening. In this regard, processes for injection molding can be selected appropriately in accordance with the molded article to be obtained. If a notched specimen is to be prepared according to JIS K-7110 for Izod impact testing, for instance, an injection-molded article is fabricated by providing a gate corresponding to one end of the specimen and causing a resin composition to flow toward the other end.

EXAMPLES

[Example 1]

A resin composition was prepared by blending 68 parts by weight of polylactic acid (LACEA (registered trademark) (product number, H-100; manufactured by Mitsui Chemicals, Inc.)), 30 parts by weight of PET (TOYOBO polyester filament yarn; cut length (average), 7 mm; fiber diameter (average), 20 $\mu$m; aspect ratio (average), 350) as reinforcement fibers, and 2 parts by weight of TPP (manufactured by DAIHACHI CHEMICAL INDUSTRY CO., LTD.) as a monomeric phosphate ester, and the compounding and molding temperature of the composition was examined. The result is set forth in Table 1. The compounding and molding temperature was defined as the temperature at which the resin composition as heated has a viscosity of 10 to 100 Pa.s. In Table 1, the addition ratio refers to the ratio of the weight of the monomeric phosphate ester to the total weight of the resin composition.

[Example 2]

A resin composition was prepared by blending 83 parts by weight of polylactic acid, 15 parts by weight of PPS (TORCON (registered trademark) manufactured by Toray Industries, Inc.; cut length (average), 7 mm; fiber diameter (average), 20 $\mu$m; aspect ratio (average), 350) as reinforcement fibers, and 2 parts by weight of TPP as a monomeric phosphate ester, and the compounding and molding temperature of the composition was examined as in Example 1. The result is set forth in Table 1.

[Example 3]

A resin composition was prepared by blending 88 parts by weight of polylactic acid, 10 parts by weight of PI (P84 manufactured by TOYOBO CO., LTD.; cut length (average), 7 mm; fiber diameter (average), 20 $\mu$m; aspect ratio (average), 350) as reinforcement fibers, and 2 parts by weight of TPP as a monomeric phosphate ester, and the compounding and molding temperature of the composition was examined as in Example 1. The result is set forth in Table 1.

[Table 1]

Table 1

| | reinforcement fibers | addition ratio (%) | melting point of reinforcement fibers (A) (˚C) | compounding and molding temperature (B) (˚C) | A - B |
|---|---|---|---|---|---|
| Ex. 1 | PET | 30 | 260 | 200 | 60 |
| Ex. 2 | PPS | 15 | 280 | 220 | 60 |
| Ex. 3 | PI | 10 | 380 | 230 | 150 |

As seen from Table 1, addition of the monomeric phosphate ester allowed each resin composition to have a compounding temperature at least 50˚C lower than the melting point of the reinforcement fibers.

[Examples 4 to 10, and Comparative Examples 1 to 6]

Injection molding was carried out by using the resin compositions which had been formulated according to the recipes as set forth in Tables 2 and 3 below, and the injection-molded articles thus obtained were evaluated in impact strength, flame retardancy, and recyclable characteristics. In the tables, the amounts of individual components are expressed in parts by weight.
Polylactic acid: LACEA (registered trademark) (product number, H-100; manufactured by Mitsui Chemicals, Inc.)
PET: TOYOBO polyester filament yarn; cut length (average), 7
mm; fiber diameter (average), 20 $\mu$m; aspect ratio (average), 350
PET (Example 9): Recycled product from PET bottles; cut length
(average), 7 mm; fiber diameter (average), 20 $\mu$m; aspect ratio (average), 350
PPS: TORCON (registered trademark) manufactured by Toray Industries, Inc.; cut length (average), 7 mm; fiber diameter

(average), 20 μm; aspect ratio (average), 350

PI: P84 manufactured by TOYOBO CO., LTD.; cut length

(average), 7 mm; fiber diameter (average), 20 μm; aspect ratio (average), 350

Fiberglass: Fiberglass A for chopped strands as described in Patent Document 1

Talc: Talc A as described in Patent Document 1

Kenaf: Bast fiber in Example 1 of Patent Document 2

TPP: Manufactured by DAIHACHI CHEMICAL INDUSTRY CO., LTD.

Condensed phosphate ester: PX-200 (trade name) manufactured by DAIHACHI CHEMICAL INDUSTRY CO., LTD.

Ammonium polyphosphate: AP-422 (trade name) manufactured by Clariant (Japan) K.K.

Phosphorus-based flame retarder: BADP (trade name) manufactured by DAIHACHI CHEMICAL INDUSTRY CO., LTD.

Anti-dripping agent: PTFE manufactured by Asahi Glass Co., Ltd.

Each resin composition was prepared by using a twin screw compounding extruder (model TEM-26SS manufactured by TOSHIBA MACHINE CO., LTD.) to compound its components together at the compounding temperature as set forth in Table 2 or 3. After compounding, the resultant resin composition was pelletized to obtain cylindrical pellets having diameters of 2 to 3 mm and lengths of about 7 mm, and the pellets were dried at 80˚C for 12 hours, then subjected to injection molding at the molding temperature as set forth in Table 2 or 3. The injection molding was carried out using an electric injection molding machine, 100 ton, manufactured by FANUC LTD at a mold temperature of 50˚C. Impact strength: Pursuant to JIS K-7110, notched specimens were prepared so as to conduct thereon the Izod impact test. Flame retardancy: Specimens fabricated by injection molding were subjected to the flame retardancy test according to UL 94. Recyclability: After notched specimens were prepared so as to conduct thereon the Izod impact test pursuant to JIS K-7110, the specimens were melted to prepare a raw material for injection molding and, by the injection molding of the material thus prepared, newly provide notched specimens, on which the Izod impact test was conducted. With such a procedure having been repeated five times, the recyclability was determined to be good, which should be denoted by a circle in the tables, if an impact strength of 5 kJ/m$^2$ or more was attained at last. In contrast, an impact strength of less than 5 kJ/m$^2$ was considered to indicate that the recyclability was no good, which should be denoted by a cross.

[Table 2]

Table 2

|  | Ex. 4 | Ex. 5 | Ex. 6 | Ex. 7 | Ex. 8 | Ex. 9 | Ex. 10 |
|---|---|---|---|---|---|---|---|
| Resin |  |  |  |  |  |  |  |
| Polylactic acid (PLA) | 78 | 60 | 60 | 60 | 83 | 50 | 60 |
| Reinforcement fibers |  |  |  |  |  |  |  |
| PET | 20 | 20 | 20 |  | 10 | 25 | 20 |
| PPS |  |  |  | 20 |  |  |  |
| PI |  |  |  |  |  |  |  |
| Fiberglass |  |  |  |  |  |  |  |
| Talc |  |  |  |  |  |  |  |
| Kenaf |  |  |  |  |  |  |  |
| Monomeric phosphate ester |  |  |  |  |  |  |  |
| TPP | 2 | 10 | 10 | 10 | 2 | 10 | 10 |
| Flame retarder |  |  |  |  |  |  |  |
| Condensed phosphate ester |  | 10 |  |  |  |  | 10 |
| Ammonium polyphosphate |  |  | 10 | 10 | 5 | 15 |  |
| Phosphorus-based flame retarder |  |  |  |  |  |  |  |
| Anti-dripping agent (PTFE) |  |  |  |  |  |  |  |
| Compounding and molding temperature (˚C) | 200 | 200 | 200 | 220 | 200 | 200 | 220 |

(continued)

|  | Ex. 4 | Ex. 5 | Ex. 6 | Ex. 7 | Ex. 8 | Ex. 9 | Ex. 10 |
|---|---|---|---|---|---|---|---|
| Impact strength (kJ/m$^2$) | 20 | 18 | 15 | 18 | 10 | 17 | 16 |
| Flame retardancy (UL94) | V2 | V0 | 5VB | 5VB | V2 | 5VB | V0 |
| Recyclability | ○ | ○ | ○ | ○ | ○ | O | ○ |

[Table 3]

Table 3

|  | Comp. Ex. 1 | Comp. Ex. 2 | Comp. Ex. 3 | Comp. Ex. 4 | Comp. Ex. 5 | Com. Ex. 6 |
|---|---|---|---|---|---|---|
| Resin |  |  |  |  |  |  |
| Polylactic acid (PLA) | 68.5 | 80 | 70 | 70 | 40 | 70 |
| Reinforcement fibers |  |  |  |  |  |  |
| PET |  |  | 20 | 20 | 40 | 20 |
| PPS |  |  |  |  |  |  |
| PI |  |  |  |  |  |  |
| Fiberglass | 15 |  |  |  |  |  |
| Talc | 15 |  |  |  |  |  |
| Kenaf |  | 20 |  |  |  |  |
| Monomeric phosphate ester |  |  |  |  |  |  |
| TPP |  |  |  |  |  |  |
| Flame retarder |  |  |  |  |  |  |
| Condensed phosphate ester |  |  | 10 |  | 20 | 10 |
| Ammonium polyphosphate |  |  |  | 10 |  |  |
| Phosphorus-based flame retarder | 1 |  |  |  |  |  |
| Anti-dripping agent (PTFE) | 0.5 |  |  |  |  |  |
| Compounding and molding temperature (˚C) | 210 | 180 | 200 | 200 | 200 | 230 |
| Impact strength (kJ/m$^2$) | - | 3.8 | 4.5 | 4.7 | 10 | 4.5 |
| Flame retardancy (UL94) | V0 | - | V0 | V0 | V0 | V0 |
| Recyclability | × | × | × | × | × | × |

Evident from Tables 2 and 3 are the following: The injection-molded articles of Examples 4 to 10 were each excellent in impact strength, flame retardancy, and recyclability. Especially in the case of Examples 6, 7 and 9 where at least 10 parts by weight of ammonium polyphoshpate was added as a flame retarder, the flame retardancy received a good rating of 5VB or higher according to U 94. In addition, Example 9 in which recycled fibers from PET bottles were used as the reinforcement fibers was in no way inferior to any other Example in both impact strength and flame retardancy, so that it is more favorable in terms of resource recycling.

Comparative Example 1 in which the reinforcement fibers used were made from fiberglass exhibited an inadequate impact strength (symbol "-" in the table denoting that this property was not measurable).

Comparative Example 2 in which kenaf fibers were used as the reinforcement fibers was inferior in impact strength, flame retardancy (symbol "-" in the table denoting that even a V2 rating could not be attained), and recyclability.

Comparative Examples 3 and 4, which contained no monomeric phosphate ester but 10 parts by weight of the condensed phosphate ester and 10 parts by weight of the ammonium polyphosphate, respectively, were inferior in impact strength and recyclability.

Comparative Example 6, which contained no monomeric phosphate ester but 10 parts by weight of the condensed phosphate ester, and had a compounding and molding temperature higher than the melting point of PET fibers (256˚C) minus 30˚C, was inferior in impact strength and recyclability.

Comparative Example 5 having contained 40 parts by weight of the PET and 20 parts by weight of the condensed phosphate ester had a lower recyclability, with a plant-based resin ratio of 40% being inadequate to contribute to the prevention of global warming and the establishment of a sound material-cycle society.

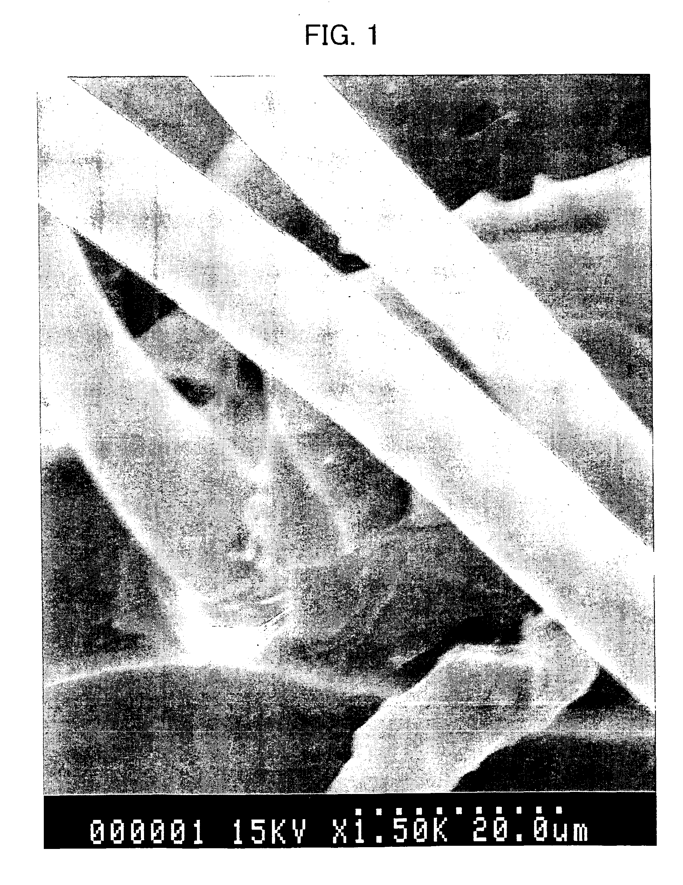

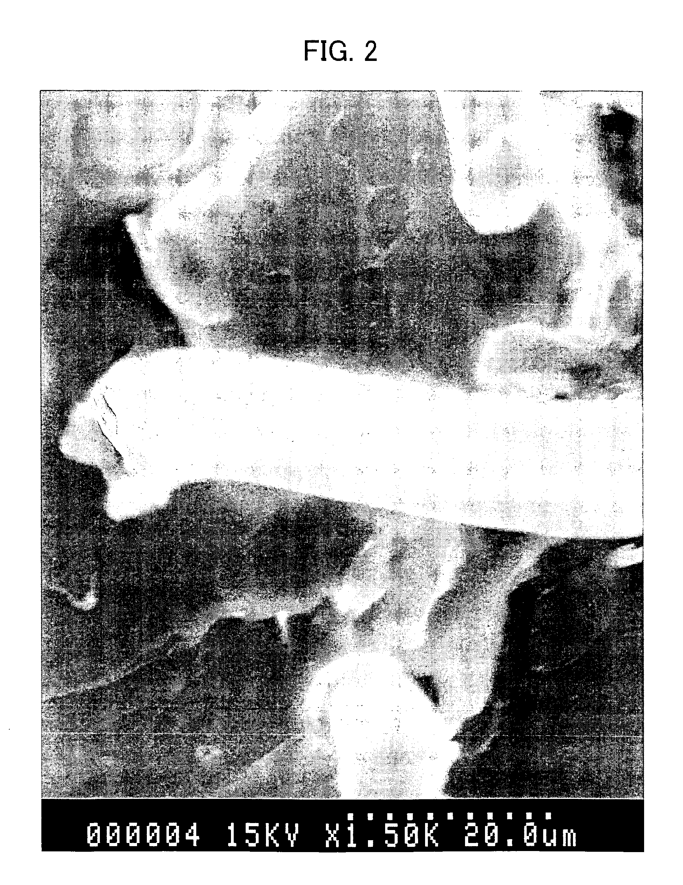

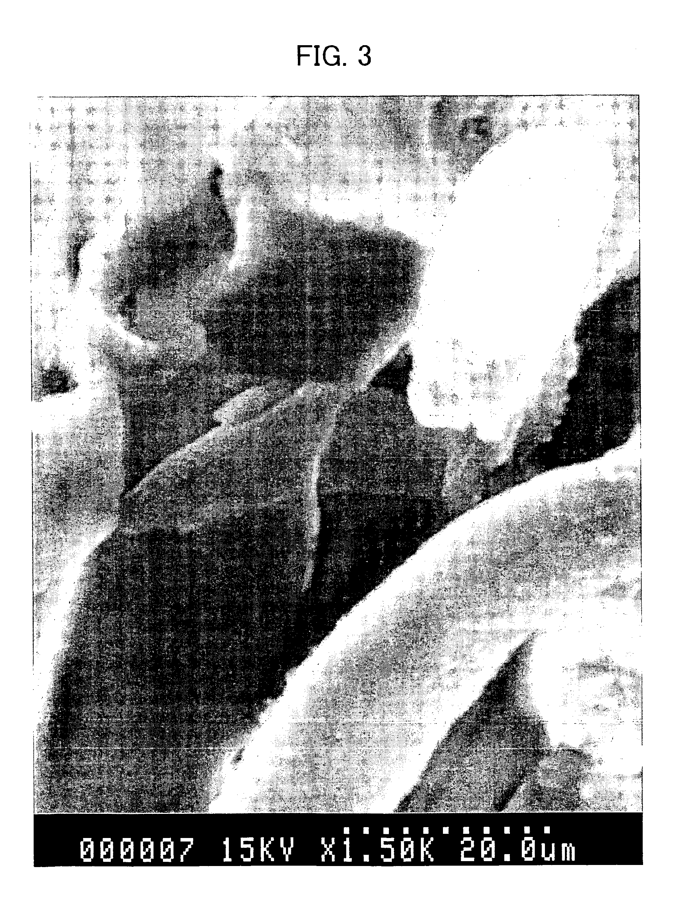

With respect to Examples 5 and 10 as well as Comparative Example 6, SEM photographs of the injection-molded articles were taken so as to determine whether or not cracks were present at the surfaces of PET fibers contained in the injection-molded articles. FIGs. 1 to 3 are SEM photographs of the injection-molded articles of Examples 5 and 10 as well as Comparative Example 6, respectively. In the injection-molded article of Example 5 that had a compounding and molding temperature of 200˚C, no crack generation was found at the PET fiber surfaces. In the injection-molded article of Example 10 that had a compounding and molding temperature of 220˚C, a slight crack generation was found at the PET fiber surfaces. Marked cracks were generated at the PET fiber surfaces in the injection-molded article of Comparative Example 6 because the article had a compounding and molding temperature of 230˚C, a temperature higher than the melting point of PET fibers (256˚C) minus 30˚C.

## Claims

1. An injection-molded article of a fiber-reinforced polylactic acid resin having a mean thickness of 2.0 mm or more, which is obtainable by injection molding of a resin composition containing components (1) to (3) below:

   (1) at least 50 parts by weight of a polylactic acid resin;
   (2) 10 to 25 parts by weight of petroleum-based fibers with a melting point of 200 to 300˚C; and
   (3) 2 to 10 parts by weight of a monomeric phosphate ester.

2. The injection-molded article of a fiber-reinforced polylactic acid resin according to claim 1, wherein said monomeric phosphate ester is at least one selected from the group consisting of trimethyl phosphate (TMP), triethyl phosphate (TEP), triphenyl phosphate (TPP), and tricresyl phosphate (TCP).

3. The injection-molded article of a fiber-reinforced polylactic acid resin according to claim 1 or 2, wherein said resin composition further contains 5 to 15 parts by weight of at least one selected from the group consisting of condensed phosphate esters and ammonium polyphosphates.

4. The injection-molded article of a fiber-reinforced polylactic acid resin according to any one of claims 1 through 3, wherein said petroleum-based fibers are of at least one selected from the group consisting of polyethylene terephthalate (PET), polyphenylene sulfite (PPS), and polyimide (PI).

5. The injection-molded article of a fiber-reinforced polylactic acid resin according to any one of claims 1 through 4, wherein the resin composition, during compounding and molding in the injection molding, has a temperature T falling within a range below:

$$T_m \text{ (melting point of the petroleum-based fibers)} - 60°C \leqq T$$

$$< T_m - 30°C.$$

6. A resin composition for use in fabrication of the injection-molded article of a fiber-reinforced polylactic acid resin according to any one of claims 1 through 5, which is obtainable by compounding the components (1) to (3):

(1) at least 50 parts by weight of a polylactic acid resin;
(2) 10 to 25 parts by weight of petroleum-based fibers with a melting point of 200 to 300˚C; and
(3) 2 to 10 parts by weight of a monomeric phosphate ester under such conditions as realizing a temperature T falling within the range:

$$T_m \text{ (melting point of the petroleum-based fibers)} - 60°C \leqq T$$
$$< T_m - 30°C.$$

7. The resin composition according to claim 6, which is obtainable by compounding not only said components (1) to (3) but 5 to 15 parts by weight of at least one selected from the group consisting of condensed phosphate esters and ammonium polyphosphates under such conditions as realizing a temperature T falling within said range.

FIG. 1

000001 15KV X1.50K 20.0um

FIG. 2

000004 15KV X1.50K 20.0um

## FIG. 3

000007  15KV  X1.50K  20.0um

<table>
<tr><td colspan="2" align="center">**INTERNATIONAL SEARCH REPORT**</td><td colspan="2">International application No.<br>PCT/JP2008/061546</td></tr>
</table>

A.  CLASSIFICATION OF SUBJECT MATTER
*C08L67/04(2006.01)i, B29C45/00(2006.01)i, C08J5/04(2006.01)i, C08K5/521(2006.01)i, C08K7/02(2006.01)i, C08L101/16(2006.01)i, B29K67/00(2006.01)n*

According to International Patent Classification (IPC) or to both national classification and IPC

B.  FIELDS SEARCHED

Minimum documentation searched (classification system followed by classification symbols)
C08L67/00-C08L67/08, C08L101/16, C08K3/00-13/08, C08J5/04-5/08, B29C45/00-45/84

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | WO 2007/015371 A1  (Unitika Ltd.),<br>08 February, 2007 (08.02.07),<br>Par. Nos. [0043], [0083]; examples; Claims<br>(Family: none) | 1,4-6<br>2,3,7 |
| Y | JP 2007-138062 A  (Kaneka Corp.),<br>07 June, 2007 (07.06.07),<br>Claims; Par. No. [0021]<br>(Family: none) | 2,3,7 |
| Y | WO 2005/028558 A1  (Matsushita Electric<br>Industrial Co., Ltd.),<br>31 March, 2005 (31.03.05),<br>Par. No. [0029]; Claims<br>& US 2007/0112107 A1    & EP 1669409 A1<br>& CN 1856543 A | 2,3,7 |

☒  Further documents are listed in the continuation of Box C.   ☐  See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>22 September, 2008 (22.09.08) | Date of mailing of the international search report<br>07 October, 2008 (07.10.08) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2008/061546 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-190025 A (Toray Industries, Inc.), 08 July, 2004 (08.07.04), Claims; Par. Nos. [0025] to [0044] (Family: none) | 2,3,7 |
| A | JP 2006-176644 A (Toyobo Co., Ltd.), 06 July, 2006 (06.07.06), Claims; examples (Family: none) | 1-7 |
| A | JP 2007-056088 A (Sumitomo Chemical Co., Ltd.), 08 March, 2007 (08.03.07), Claims; Par. Nos. [0024], [0084] (Family: none) | 1-7 |
| A | JP 2007-091790 A (Toyobo Co., Ltd.), 12 April, 2007 (12.04.07), Claims; Par. No. [0011]; examples (Family: none) | 1-7 |
| A | JP 2005-138458 A (Fuji Xerox Co., Ltd.), 02 June, 2005 (02.06.05), Claims (Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003301097 A
- JP 2006131828 A
- JP 2005200517 A
- WO 2004063282 A1
- JP 7033861 A
- JP 59096123 A
- US P4057537 A
- EP 261572 A

**Non-patent literature cited in the description**

- Shoho kara Manabu Fira Katsuyo Gijutsu (Introductory Handbook to Utilization of Fillers). Kogyo Chosakai Publishing, Inc, 20 October 2003
- *Polymer Preprints,* vol. 44, 3198-3199
- *Polymer Bulletin,* 1985, vol. 14, 491-495
- *Makromol. Chem.,* 1986, vol. 187, 1611-1628